# EUROPEAN PATENT APPLICATION

(11) **EP 2 180 697 A1**
(43) Date of publication of application: **28.04.2010**
(21) Application number: 09161625.0
(22) Date of filing: 01.06.2009
(51) Int. Cl.: H04N 5/445

(54) **Display apparatus and method for displaying widget**

(30) Priority: 21.10.2008 KR 20080103180
(71) Applicant: Samsung Electronics Co., Ltd., Suwon-si, Gyeonggi-do 442-742 (KR)
(72) Inventor: Park, Mi-ju, Seoul (KR); Lee, Sang-hee, Seoul (KR); Kwon, Yong-hwan, Gyeonggi-do (KR); Kim, Won-il, Gyeonggi-do (KR); Yoon, Yeo-ri, Gyeonggi-do (KR)
(74) Representative: Robinson, Ian Michael

(57) **Abstract**

A display apparatus and a method for displaying a widget thereon are provided. The display apparatus includes a generation unit which generates a displayable target widget, a display unit which displays the generated target widget, and a controlling unit which processes one or more target widgets related to a program a user is viewing so that the target widgets are displayed.

## Description

### CROSS-REFERENCE TO RELATED APPLICATIONS

This application claims priority under 35 U.S.C. § 119 from Korean Patent Application No. 10-2008-0103180, filed on October 21, 2008, in the Korean Intellectual Property Office, the disclosure of which is incorporated herein by reference in its entirety.

### BACKGROUND OF THE INVENTION

### 1. Field of the Invention

Apparatuses and methods consistent with the present invention relate to a display apparatus and a method for displaying widgets thereon, and more particularly, to a display apparatus which sorts widgets related to a program and displays the sorted widgets, and a method for displaying widgets thereon.

### 2. Description of the Related Art

As a result of the development of digital and web technology, a user is able to perform a multi-tasking operation by executing a widget on a portion of a television (TV). The user is able to receive a frequently used service in real-time using the currently executed widget.

However, when a related art display apparatus is used in a widget mode, an identical widget is displayed irrespective of the program a user is viewing. Accordingly, a display apparatus displays a widget which a user does not want to view, and thus the user must select another widget to obtain information related to the desired program.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

The present invention provides a display apparatus which sorts widgets related to a program and provides the sorted widgets instead of providing unified widgets, and a method for displaying widgets thereon.

According to an exemplary aspect of the present invention, there is provided a display apparatus, including a generation unit which generates a displayable target widget; a display unit which displays the generated target widget; and a controlling unit which processes one or more target widgets related to a program a user is viewing so that the target widgets are displayed.

The controlling unit may automatically analyze properties of the program, and provides the one or more target widgets according to the analyzed properties.

The one or more automatically displayed target widgets may be added or deleted by a user.

The controlling unit may display a list of the one or more target widgets according to the analyzed properties on the display unit, and display one or more target widgets selected from the displayed list by a user together with the program on the display unit.

The display apparatus may further include a storage unit which stores a target widget list; and a user selection unit by which a user selects one or more target widgets related to properties of the program from the target widget list, wherein the controlling unit provides the one or more user selected target widgets.

The controlling unit may map the one or more target widgets selected using the user selection unit according to the properties of the program, and stores the mapping information in the storage unit, and if a program having the same properties as those of the program is viewed, the controlling unit may generate the target widgets mapped according to the properties of the program and displays the generated target widgets.

The one or more target widgets may be related to at least one of a genre of the program, a channel providing the program, and a scene being displayed on the display.

The one or more displayed target widgets and the one or more un-displayed target widgets may be updated in real-time.

According to an exemplary aspect of the present invention, there is provided a method for displaying a widget on a display apparatus, including playing back a selected program, and displaying the played-back program; generating one or more target widgets related to the played-back program; and displaying the one ore more generated target widgets together with a screen of the displayed program.

The generating operation may include automatically analyzing properties of the program; sorting the one or more target widgets corresponding to the analyzed properties from a plurality of widgets; and generating the one or more sorted target widgets.

The generating operation may include displaying a list of one or more target widgets according to the analyzed properties; and selecting one or more target widgets from the displayed list by a user, wherein the displaying the one or more generated target widgets together with a screen of the displayed program operation may include displaying the one or more target widgets selected by a user together with the program.

The method may further include mapping the one or more target widgets selected by a user with the properties of the program, and storing the mapping information, wherein if a program having the same properties as those of the program is selected, generating the target widgets mapped with the properties of the program and displaying the generated target widgets.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a block diagram illustrating a display apparatus according to an exemplary embodiment of the present invention;

FIG. 2 is a diagram illustrating a content providing system to which a display apparatus according to an exemplary embodiment of the present invention is applied;

FIG. 3 is a block diagram illustrating a display apparatus of FIG. 2, according to an exemplary embodiment of the present invention;

FIGS. 4A to 4C are diagrams provided to explain a method for setting a target widget if a user selects an automatic mode;

FIGS. 5A to 5D are diagrams provided to explain a method for setting a target widget if a user selects a manual mode;

FIGS. 6A to 6C are views illustrating a target widget for each genre if "manual-genre" is selected as a widget display mode;

FIGS. 7A and 7B are views provided to explain the process of grouping a plurality of widgets;

FIG. 8 is a flowchart provided to explain a method for manually sorting target widgets; and

FIG. 9 is a flowchart provided to explain a method for displaying a widget of a display apparatus according to an exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

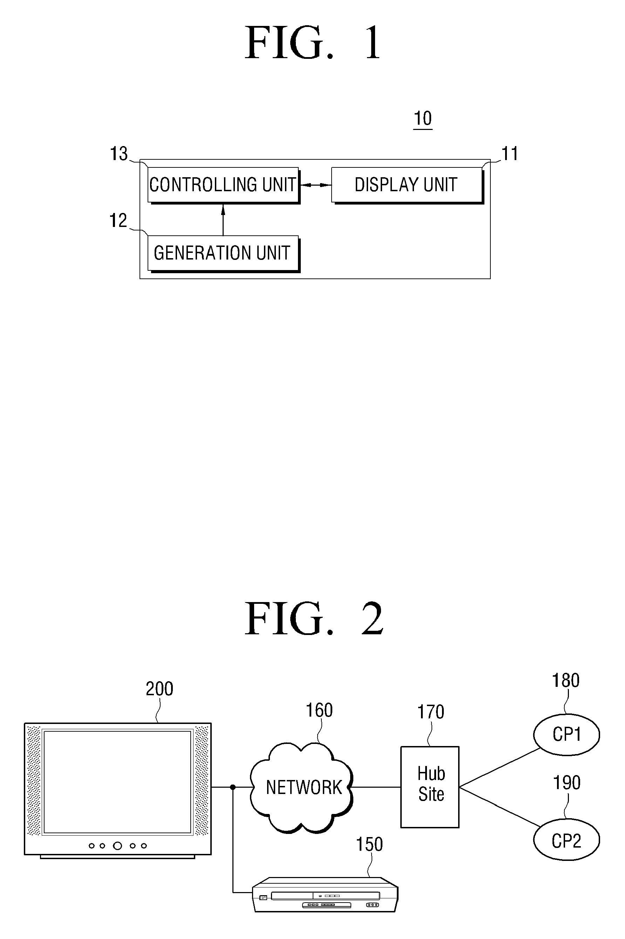

FIG. 1 is a block diagram illustrating a display apparatus according to an exemplary embodiment of the present invention.

A display apparatus 10 illustrated in FIG. 1 is an apparatus which displays an image, such as a digital television (TV), a mobile phone, a personal digital assistant (PDA), or a computer. Referring to FIG. 1, the display apparatus 10 includes a display unit 11, a generation unit 12, and a controlling unit 13.

The display unit 11 displays a stored image, or an image of a program received from an external source. The external source may be a broadcast station or an external input device such a digital video disc player (DVDP). The display unit 11 also displays a widget stored in the display apparatus 10, or a widget received over a network.

The generation unit 12 generates a displayable widget using a widget program stored in the display apparatus 10.

The controlling unit 13 sorts one or more target widgets related to a program displayed on the display unit 11 from among a plurality of widgets. Specifically, the controlling unit 13 sorts one or more target widgets corresponding to a set property among a plurality of properties related to the program from the plurality of target widgets. The controlling unit 13 controls the generation unit 12 to generate the sorted one or more target widgets and the display unit 11 to display the generated one or more target widgets.

The plurality of properties related to a program include the genre of the program, a channel for providing the program, an external apparatus for providing the program, a time for viewing the program, and various other properties. Accordingly, a user may view a desired widget from among the widgets corresponding to the property related to the program set by the user, that is, a target widget, while viewing the program.

FIG. 2 is a diagram illustrating a content providing system to which a display apparatus according to an exemplary embodiment of the present invention is applied.

As shown in FIG. 2, the content providing system includes a display apparatus 200, an external apparatus 150, a network 160, a hub site 170, a content provider 1 (CP 1) 180, and a content provider 2 (CP 2) 190.

The external apparatus 150 is connected to the display apparatus 200 via a cable and a terminal, or over the network 160, and transmits various images. The external apparatus 150 may be any type of image transmission apparatus, such as a DVDP, a cable settop box, a personal computer (PC), a laptop computer, or a digital camera.

The display apparatus 200 is connected to the hub site 170 over the network 160. The display apparatus 200 receives multimedia content such as moving images or music, or data information content regarding news, stocks, or weather from the hub site 170, and displays the received content in the form of a widget.

The widget may be generated on the display apparatus 200 based on the content provided by the CP 1 180 or CP 2 190. The CP 1 180 or CP 2 190 may generate a widget, and the display apparatus 200 receives the generated widget from the CP 1 180 or CP 2 190 and displays the widget as it is.

The hub site 170 receives content from the CP 1 180 and CP 2 190, manages the received content, and transmits the content to the display apparatus 200 over the network 160. The hub site 170 may receive a widget from the CP 1 180 and CP 2 190 and transmit the widget to the display apparatus 200. The hub site 170 may be a server which is managed by a provider of the display apparatus 200 in order to provide a user using the display apparatus 200 with a content service.

The CP 1 180 and the CP 2 190 provides the hub site 170 with content to embody a widget. For example, the CP 1 180 may be the Internet search engine "Google", and provide information regarding weather and stocks. The CP 2 190 may be the Internet search engine "Yahoo", and provide multimedia content such as moving images. FIG. 2 illustrates two CPs, CP 1 180 and CP 2 190, for convenience of description, but this is not limited thereto.

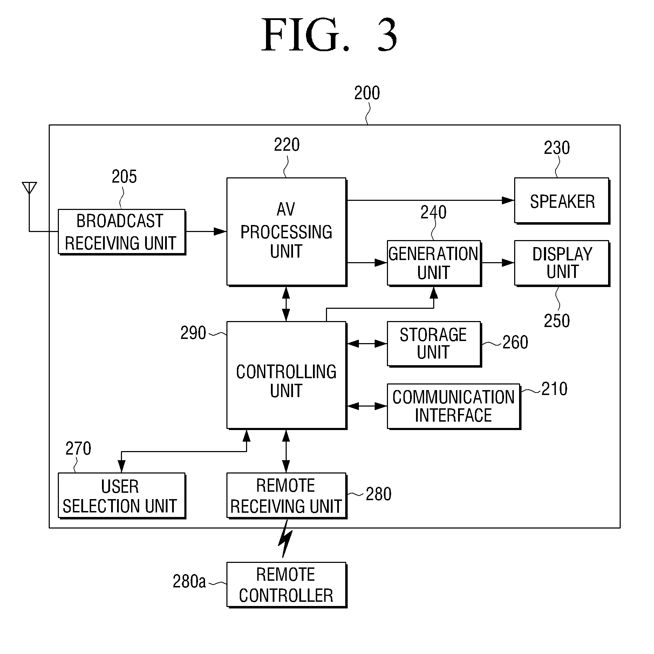

FIG. 3 is a block diagram illustrating the display apparatus of FIG. 2, according to an exemplary embodiment of the present invention.

The display apparatus 200 of FIG. 3 may be a TV. The display apparatus 200 includes a broadcast receiving unit 205, a communication interface 210, an audio/video (AV) processing unit 220, a speaker 230, a generation unit 240, a display unit 250, a storage unit 260, a user selection unit 270, a remote receiving unit 280, and a controlling unit 290.

The broadcast receiving unit 205 receives a broadcast signal from a broadcast station or a satellite over a wire or wirelessly, and tunes to the received broadcast signal. The broadcast signal may include a data signal having information regarding news, weather, or stocks.

The communication interface 210 is connected to the external apparatus 150 over the network 160. The communication interface 210 receives an image a user desires to view from the external apparatus 150. The network 160 may be a wired network or a wireless network.

The communication interface 210 enables the display apparatus 200 and the hub site 170 to communicate with each other over the network 160. The communication interface 210 requests that the hub site 170 transmit a widget, and receives the widget or content of the widget from the hub site 170 in real-time. The content provided in real-time are updated to correspond to each widget in the storage unit 260.

The communication interface 210 receives various content from a web site over the network 160. As doing so, a broadcast displaying apparatus 200 provides a bi-directional service such as an Internet Protocol TV.

The AV processing unit 220 processes an AV signal input from the broadcast receiving apparatus 205 or a three-dimensional (3D) image received via the communication interface 210 using video decoding, video scaling, and audio decoding. The AV processing unit 220 outputs an image signal to the generation unit 240, and outputs an audio signal to the speaker 230.

If the received image and audio signals are stored in the storage unit 260, the AV processing unit 220 outputs the image and audio in a compressed format to the storage unit 260.

The generation unit 240 generates various menus on a graphical user interface (GUI) or on-screen display (OSD) in order to provide a user with the menus. The generation unit 240 adds the generated menu to the image signal input from the AV processing unit 220 and outputs the image signal having the menu to the display unit 250. The menu generated by the generation unit 240 may be a widget list including one or more widgets.

The display unit 250 displays a widget list provided by the generation unit 240 and a program. The program displayed on the display unit 250 may include properties such as information regarding genres and channels. The display unit 250 may be implemented using various display elements, for example a liquid crystal display (LCD), or a plasma display panel (PDP).

The storage unit 260 stores an image signal, a data signal, or content related to a widget which is received through the broadcast receiving unit 205 or the communication interface 210. The content required to implement the plurality of widgets is updated in real-time. Accordingly, the generation unit 240 may promptly generate a widget requested to be executed.

The storage unit 250 stores applications for providing a widget corresponding to each of a plurality of content providers. The generation unit 240 generates a corresponding widget using the widget providing application. The storage unit 260 may be implemented using a hard disc drive (HDD) or a non-volatile memory.

The storage unit 260 stores a widget display mode set by a user. The widget display mode may be an automatic mode or a manual mode. A target widget may be sorted automatically or manually according to the mode, and the sorted target widget is displayed. The target widget may be sorted from among the plurality of widgets based on the property of the program. Each mode will be explained below.

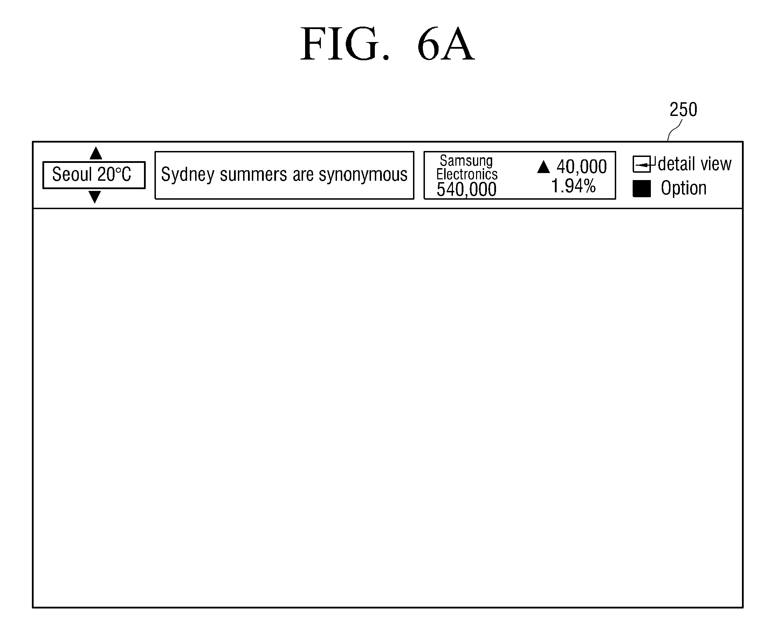

The storage unit 260 maps one or more target widgets manually selected by a user with the property of program. The mapped target widgets are displayed as shown in FIGS. 6A to 6C.

The user selection unit 270 is an interface to receive a command from a user and to provide the controlling unit 290 with the command, and includes a plurality of numerical keys, direction keys and function keys, along with various other buttons. A user selects a desired widget display mode by manipulating the user selection unit 270, and selects one or more target widgets or a group of widgets related to the property of the program from among the widget list stored in the storage unit 260.

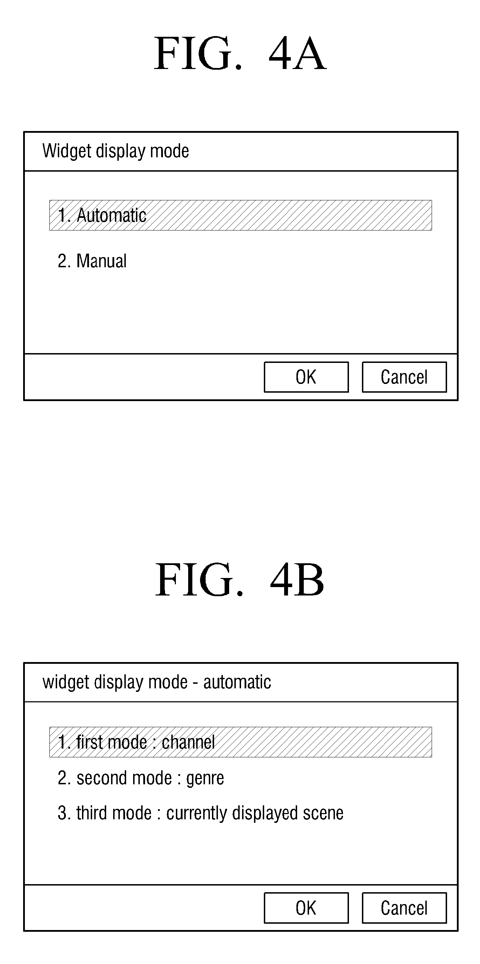

FIGS. 4A to 4C are diagrams provided to explain a method for setting a target widget if a user selects an automatic mode.

Referring to FIG. 4A, an initial menu includes an automatic mode and a manual mode. In the automatic mode, the controlling unit 290 automatically sorts widgets related to a property of a program which a user is viewing, and displays the sorted widget. In the manual mode, the controlling unit 290 displays widgets which a user has previously sorted for each property of programs.

If a user selects an automatic mode in FIG. 4A, the generation unit 240 generates sub menus representing properties of a program as shown in FIG. 4B. The properties of a program include the channel, genre, and currently displayed scene, and may also include other items.

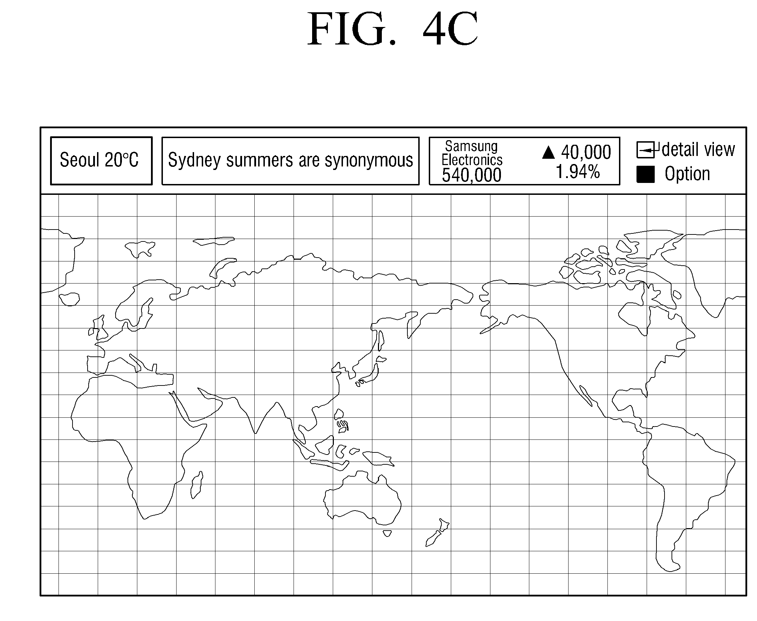

If a user selects a first mode to automatically sort target widgets related to a channel, the widget display mode is set to "automatic-channel" and the set widget display mode "automatic-channel" is stored in storage unit 260. Accordingly, if a user views the first channel, the controlling unit 290 automatically sorts target widgets related to the first channel, and causes the target widgets related to the first channel to be displayed together with the program on the display unit 250 as shown in FIG. 4C. The target widgets related to the first channel may be related to the programs provided by the first channel or may be various widgets related to the broadcast station which provides the first channel.

If a user selects a second mode to automatically sort target widgets related to a genre, the widget display mode is set to "automatic-genre" and the set widget display mode "automatic-genre" is stored in the storage unit 260. If a user views a drama, the controlling unit 290 automatically sorts target widgets related to the drama, and causes the target widgets related to the drama to be displayed.

If a user selects a third mode to automatically sort target widgets related to a currently displayed scene, the widget display mode is set to "automatic-scene" and the set widget display mode "automatic-scene" is stored in the storage unit 260. If the scene of a prizegiving ceremony is displayed on the display unit 250, the controlling unit 290 automatically sorts widgets to provide information regarding the ceremony and widgets to show a winner's history, and causes the widgets to be displayed as a target widget.

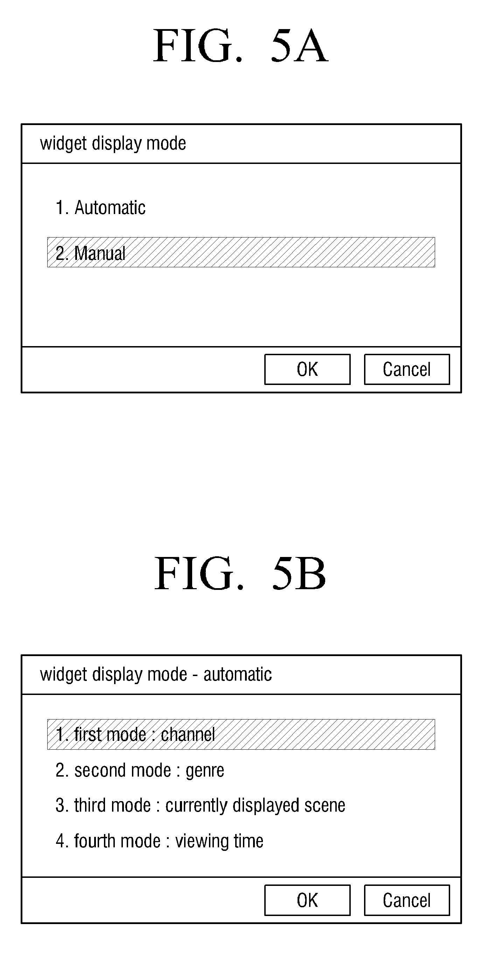

FIGS. 5A to 5D are diagrams provided to explain a method for setting target widgets if a user selects the manual mode.

If a user selects the manual mode in FIG. 5A, the generation unit 240 generates sub menus which represent properties of a program as shown in FIG. 5B. The properties of a program include the channel, genre, and time at which a user views the program. Other properties will not be described for convenience of description.

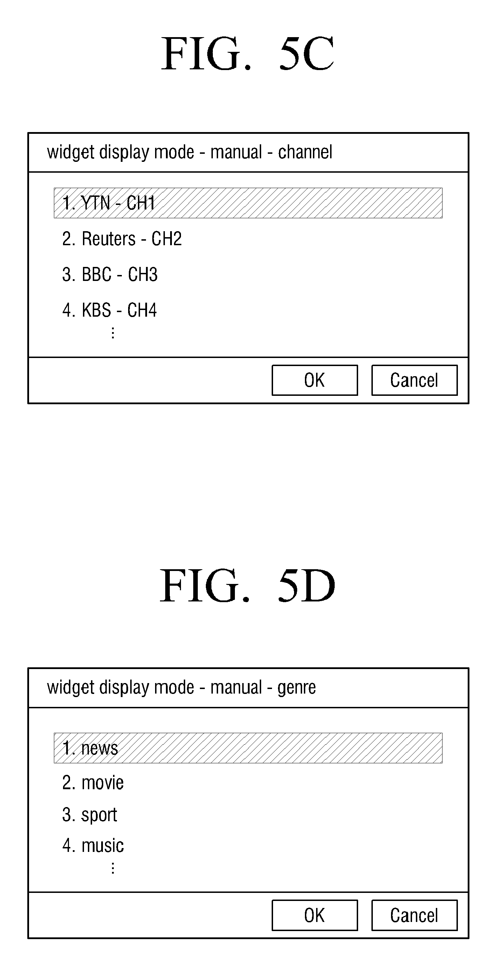

If a user selects the first mode to manually sort target widgets related to a channel, the generation unit 240 generates a channel list as shown in FIG. 5C. A user may select and set a desired target widget for each channel using the user interface (UI) of FIG. 5C. The channel list illustrated in FIG. 5C includes a plurality of channels provided by a broadcast station, cable channels, external channels provided by an external apparatus, and various types of channels.

If a user selects a channel to set target widgets, for example the first channel "YTN-CH1," from among the plurality of channels shown in FIG. 5C, the generation unit 240 generates a widget list. The widget list may be stored in the storage unit 260 or may be received by the controlling unit 290 through the hub site 170.

If a user selects one or more desired target widgets from the widget list, identification information of the selected target widgets is mapped with the first channel, and the mapping information is stored in the storage unit 260. If the widget mode is set to "manual-channel," and a user views the first channel, the controlling unit 290 recognizes the identification information of the target widget mapped with the first channel from the storage unit 260, and controls the generation unit 240 to generate a widget corresponding to the recognized identification information and the display unit 250 to display the generated widget.

If a user selects the second mode to manually sort target widgets related to a genre through the UI illustrated in FIG. 5B, the generation unit 240 generates a genre list of programs as shown in FIG. 5D. The user may select and set a desired target widget for each genre using the UI of FIG. 5D. If the widget mode is set to "manual-genre," and a user views a drama, the display unit 250 displays the target widget for a drama set by the user.

A user may also set a desired target widget for a currently displayed scene using the above manner or a target widget for each time. For example, a user may set a news widget provided by the Internet search engine "Google" and a weather widget provided by the Internet search engine "Naver" to be displayed between 1 and 2 P.M.. In this situation, the "Google" news widget and the "Naver" weather widget may be set as a target widget.

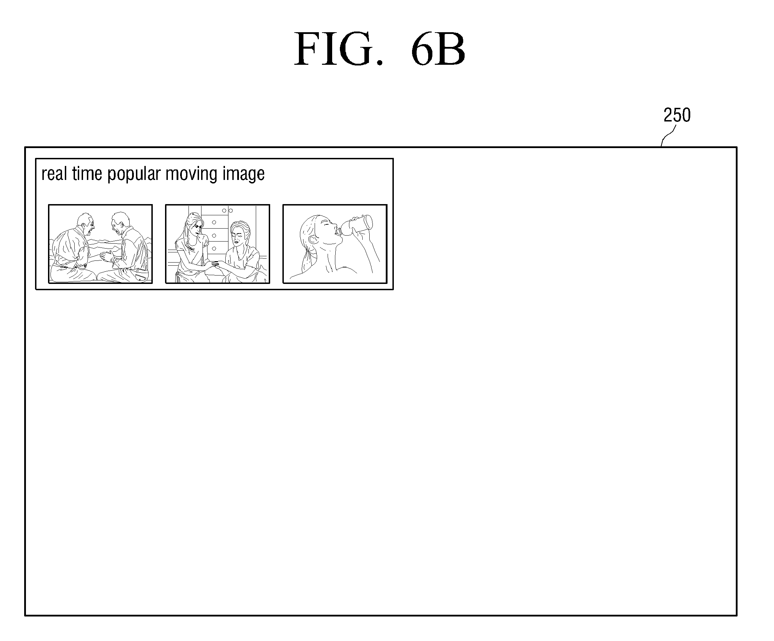

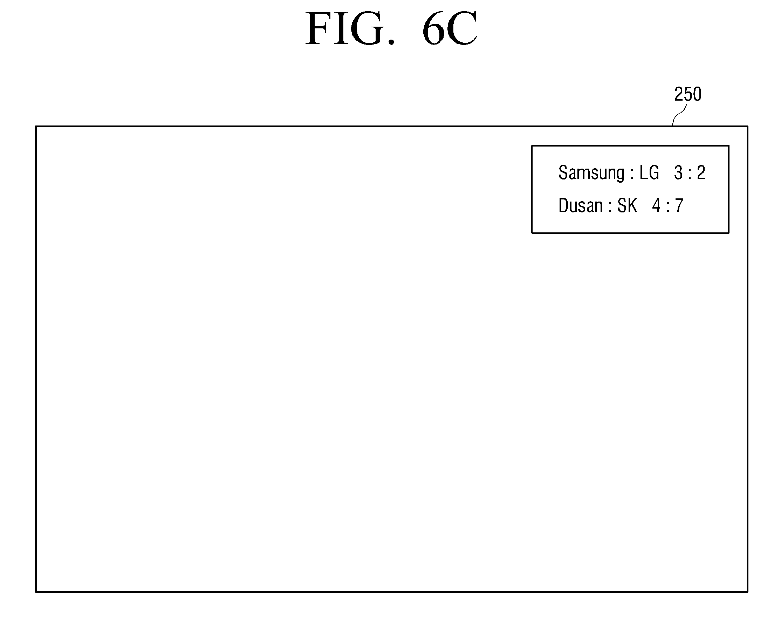

FIGS. 6A to 6C are views illustrating a target widget for each genre if "manual-genre" is selected as a widget display mode. If the genre of a program a user is viewing is news, the display unit 250 displays target widgets such as widgets for weather and stocks together with the news as shown in FIG. 6A. If the genre of a program a user is viewing is a drama, the display unit 250 displays target widgets such as widgets for moving images together with the drama as shown in FIG. 6B, and if the genre of a program a user is viewing is sport, the display unit 250 displays a target widget together with the sport as shown in FIG. 6C.

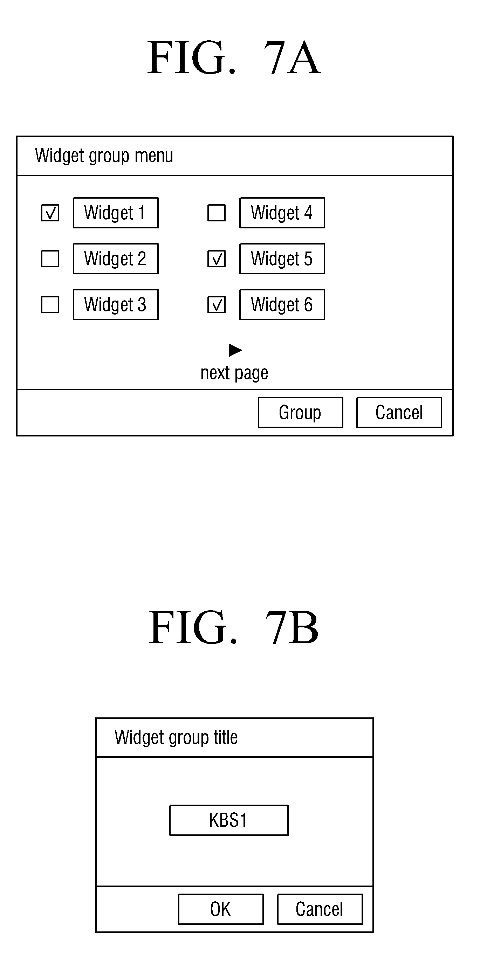

A user may select two or more widgets from among the plurality of widgets and group the selected widgets. For example, if a user requests that widgets be grouped, the generation unit 240 generates a group menu for widgets as shown in FIG. 7A. The group menu for widgets may display displayable widgets. A user selects desired widgets from the displayable widgets, groups the selected widgets into a widget list, and allocates a title to the widget list. For example, if a user checks Widget 1, Widget 5, and Widget 6, and presses a button "Group" on the display illustrated in FIG. 7A, the generation unit 240 generates a UI to set a title for the widget list as shown in FIG. 7B.

Accordingly, a user may designate a title of a group having the selected widgets and generate a widget group, and the generated widget group may be used as a target widget related to the property of a program. If a user desires to set a target widget using the UI of FIGS. 5C and 5D, the user may select widgets individually or a widget group to set target widgets.

Returning to FIG. 3, the remote receiving unit 280 remotely receives a user's manipulation from a remote controller 180a, and transmits the received manipulation to the controlling unit 290. The remote controller 180a operates in the similar manner to the user selection unit 270.

The controlling unit 290 controls overall operations of the broadcast displaying apparatus 200 based on a user command received from the user selection unit 270 or the remote controller 180a. Various programs required to control the display apparatus 200 are stored in the storage unit 260. The controlling unit 290 causes an image corresponding to the user command to be displayed on the display unit 250. The image corresponding to the user command represents the above images described with reference to FIGS. 4Ato 4C, 5A to 5D, 6A to 6C, and 7A to 7B.

If a user inputs a command for displaying a widget while viewing a program, the controlling unit 290 controls the generation unit 240 and the display unit 250 so that one or more target widgets related to the program are sorted from the plurality of widgets and the sorted target widgets are displayed. The controlling unit 290 sorts one or more target widgets from the plurality of widgets stored in the storage unit 260, or requests that the hub site 170 provides the target widgets.

One or more target widgets are automatically analyzed and displayed, or the target widgets sorted by a user are displayed under the control of the controlling unit 290.

The case in which the controlling unit 290 automatically sorts target widgets and displays the target widgets will be explained below.

The controlling unit 290 automatically analyzes the properties of a program, and sorts one or more target widgets corresponding to the analyzed properties. The properties of a program are varied, for example the channel providing the program, the genre of the program, and a currently displayed scene. The controlling unit 290 controls the generation unit 240 to generate one or more sorted target widgets and the display unit 250 to display the generated target widgets. The controlling unit 290 uses content stored in the storage unit 260 or receives content from the corresponding CP so as to generate target widgets.

Additionally, if target widgets corresponding to the analyzed properties are sorted, the controlling unit 290 causes the sorted target widgets to be displayed on the display unit 250 and thus a user may select desired target widgets. A user may also add or delete the displayed target widgets.

If a widget display mode is set to "automatic mode" and "channel" through FIGS. 4A and 4B, the controlling unit 290 determines a channel for providing a program and automatically sorts one or more target widgets related to the determined channel. For example, if the channel providing a program is the first channel, the controlling unit 290 may sort the widgets related to the first channel to provide as target widgets and provide the target widgets as shown in FIG. 4C. The controlling unit 290 may sort target widgets from among the plurality of widgets stored in the storage unit 260 or a widget list provided by the hub site 160.

The case in which the controlling unit 290 manually sorts target widgets and displays the sorted target widgets will be explained below.

If a widget display mode is set to "manual mode" and "channel" through FIGS. 5A and 5C, the controlling unit 290 determines the channel providing the program which is currently viewed, and determines target widgets mapped with the determined channel from the storage unit 260. The controlling unit 290 determines target widgets which a user has manually sorted for each channel through FIGS. 5A to 5C, and controls the generation unit 240 and the display unit 250 so that the target widgets corresponding to the determined channel are provided. If a user changes the channel, the controlling unit 290 determines the target widgets mapped with the changed channel from the storage unit 260, and displays the determined target widgets.

If a widget display mode is set to "manual mode" and "genre" through FIGS. 5A, 5B and 5D, the controlling unit 290 determines the genre of a program which is currently viewed, and identifies target widgets mapped with the determined genre from the storage unit 260. The controlling unit 290 controls the generation unit 240 and the display unit 250 so that the target widgets sorted by a user are provided as shown in FIGS. 6A to 6C.

If a user views a program having the same property as that of a program which a user is viewing, the controlling unit 290 causes the target widgets displayed together with the previous program to be displayed. Accordingly, the target widgets sorted for each property are adaptively provided according to the programs, and thus a user may appropriately use various widgets for each situation.

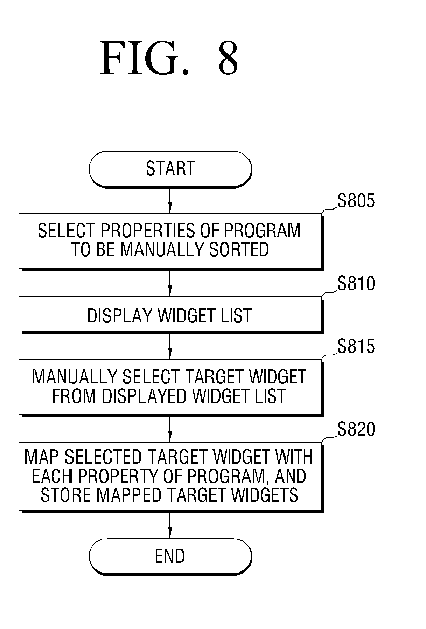

FIG. 8 is a flowchart provided to explain a method for manually sorting target widgets.

A user selects properties of a program to be manually sorted using a UI of FIGS. 5B and 5C (S805).

If the properties of the program are selected through FIGS. 5B and 5C, the controlling unit 290 controls the generation unit 240 and the display unit 250 so as to display a plurality of widgets and a widget list including a widget group (S810). The widget list is stored in the storage unit 260 or is provided by the plurality of CPs through the hub site 170.

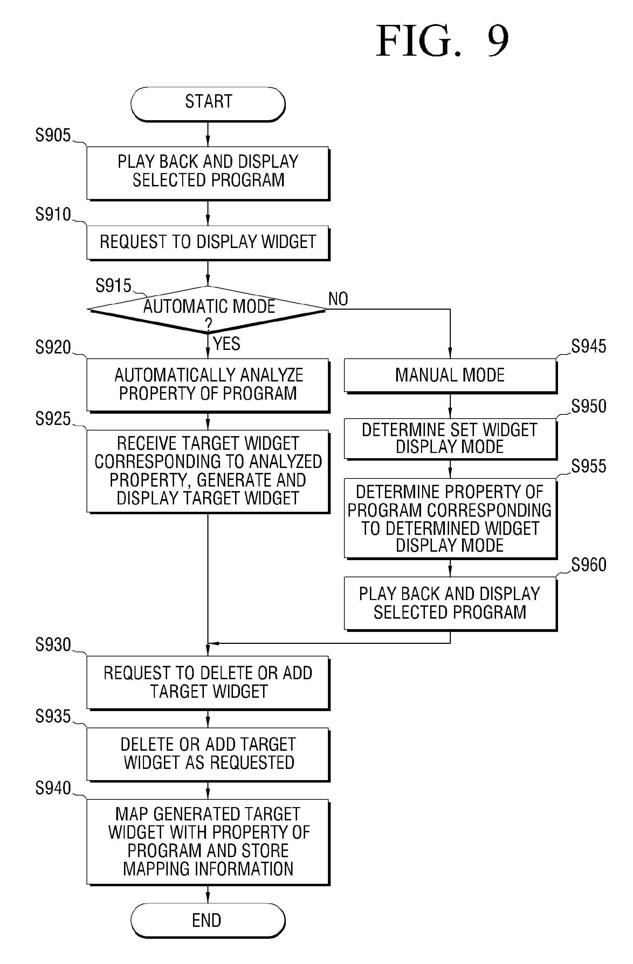

If a user manually selects one or more target widgets from the displayed widget list by manipulating the user selection unit 270 (S815), the controlling unit 290 maps the one or more selected target widgets with each property of the program, and stores the mapped target widgets (S820). The target widgets mapped with each property of the program are used in operation S960 of FIG. 9.

For example, if the first channel is selected in operation S805, the controlling unit 290 maps the target widgets selected in operation S815 with the first channel. Accordingly, if a user views a program through the first channel, and a widget display mode is set to "manual-channel," the controlling unit 290 displays one or more target widgets which are mapped and stored in operation S820 on the display unit 250.

FIG. 9 is a flowchart provided to explain a method for displaying a widget of a display apparatus according to an exemplary embodiment of the present invention.

Referring to FIGS. 3 to 9, the controlling unit 290 controls the AV processing unit 220, the speaker 230, and the display unit 250 so that the program selected by a user is played back and displayed (S905). The played-back program may be a broadcast signal or an AV signal provided by the external apparatus 150.

If it is requested that a widget be displayed (S910), the controlling unit 290 determines whether the widget display mode is set to an automatic mode (S915).

If it is determined that a widget display mode is set to the automatic mode, the controlling unit 290 automatically analyzes the property of a program a user is viewing (S920), and controls the generation unit 240 to generate one or more target widgets corresponding to the analyzed property and the display unit 250 to display the generated target widgets (S925).

In operation S925, the controlling unit 290 determines one or more target widgets corresponding to the property, such as the channel or the genre of the program, and controls the generation unit 240 to receive content of the one or more determined target widgets from the storage unit 260 or the hub site 170 and generate the content of the one or more determined target widgets. The controlling unit 290 may generate target widgets corresponding to the predetermined property through FIG. 4B. In this situation, the controlling unit 290 displays a list of the determined target widgets on the display unit 250 prior to displaying the target widgets together with the program, and then enables a user to select target widgets desired to be displayed.

After performing operation S925, if a user requests that one or more target widgets be deleted from or added to on the user selection unit 270 (S930), the controlling unit 290 deletes or adds the target widgets requested to be deleted from or added to the display unit 250 (S935).

The controlling unit 290 maps the target widgets displayed on the display unit 250 in operation S925 or the target widgets displayed on the display unit 250 in operation S935 with the properties of the program, and stores the mapping information (S940). If a program having the same properties as those of the above program is viewed, the controlling unit 290 may provide the pre-stored target widgets without sorting the target widgets related to the properties of the program. Operation S940 may be optionally provided.

If it is determined that the widget display mode is not set to the automatic mode in operation S915, the controlling unit 290 determines that a widget display mode is set to the manual mode (S945).

The controlling unit 290 determines the widget display mode set in the storage unit 260 (S950), and determines the properties of programs corresponding to the determined widget display mode (S955). For example, if the widget display mode is set to "manual-channel," the controlling unit 290 determines the channel of a program a user is viewing, and if the widget display mode is set to "second mode-genre," the controlling unit 290 determines the genre of a program a user is viewing.

The controlling unit 290 determines a target widget mapped with the properties of the program from the storage unit 260, and displays the determined target widget on the display unit 250. Operations S930 to S940 are performed after operation S960 is performed.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A display apparatus, comprising:
a generation unit which generates a displayable target widget;
a display unit which displays the generated target widget; and
a controlling unit which processes one or more target widgets related to a program a user is viewing so that the target widgets are displayed.

2. The display apparatus as claimed in claim 1, wherein the controlling unit automatically analyzes properties of the program, and provides the one or more target widgets according to the analyzed properties.

3. The display apparatus as claimed in claim 2, wherein the one or more automatically displayed target widgets are added or deleted by a user.

4. The display apparatus as claimed in claim 2, wherein the controlling unit displays a list of the one or more target widgets according to the analyzed properties on the display unit, and displays one or more target widgets selected from the displayed list by a user together with the program on the display unit.

5. The display apparatus as claimed in claim 1, further comprising:
a storage unit which stores a target widget list; and
a user selection unit by which a user selects one or more target widgets related to properties of the program from the target widget list,
wherein the controlling unit provides the one or more user selected target widgets.

6. The display apparatus as claimed in claim 5, wherein the controlling unit maps the one or more target widgets selected using the user selection unit according to the properties of the program, and stores the mapping information in the storage unit, and if a program having the same properties as those of the program is viewed, the controlling unit generates the target widgets mapped according to the properties of the program and displays the generated target widgets.

7. The display apparatus as claimed in claim 1, wherein the one or more target widgets are related to at least one of a genre of the program, a channel providing the program, and a scene being displayed on the display.

8. A method for displaying a widget on a display apparatus, comprising:
playing back a selected program, and displaying the played-back program;
generating one or more target widgets related to the played-back program; and
displaying the one ore more generated target widgets together with a screen of the displayed program.

9. The method as claimed in claim 8, wherein the generating comprises:
automatically analyzing properties of the program;
sorting the one or more target widgets corresponding to the analyzed properties from a plurality of widgets; and
generating the one or more sorted target widgets.

10. The method as claimed in claim 9, wherein the one or more automatically displayed target widgets are added or deleted by a user.

11. The method as claimed in claim 9, wherein the generating further comprises:
displaying a list of one or more target widgets according to the analyzed properties; and
selecting one or more target widgets from the displayed list by a user,
wherein the displaying the one or more generated target widgets together with a screen of the displayed program comprises:
displaying the one or more target widgets selected by a user together with the program.

12. The method as claimed in claim 8, wherein the one or more target widgets are sorted by a user according to properties of a program.

13. The method as claimed in claim 12, further comprising:
mapping the one or more target widgets selected by a user with the properties of the program, and storing the mapping information,
wherein if a program having the same properties as those of the program is selected, generating the target widgets mapped with the properties of the program and displaying the generated target widgets.

14. The method as claimed in claim 8, wherein the one or more target widgets are related to at least one of a genre of the program, a channel providing the program, and a scene of the played-back program.
